# EUROPEAN PATENT APPLICATION

(11) **EP 4 773 004 A1**
(43) Date of publication of application: **08.07.2026**
(21) Application number: 24858218.1
(22) Date of filing: 02.08.2024
(51) Int. Cl.: G06F 9/50

(54) **VIDEO MEMORY ALLOCATION METHOD, VIDEO MEMORY REQUEST METHOD, AND DEVICE AND STORAGE MEDIUM**

(30) Priority: 01.09.2023 CN 202311125060
(71) Applicant: Cloud Intelligence Assets Holding (Singapore) Private Limited, Singapore 189554 (SG)
(72) Inventor: PENG, Cheng, Beijing 100102 (CN); HE, Min, Shanghai 200120 (CN); ZHENG, Xiao, Hangzhou, Zhejiang 310030 (CN)
(74) Representative: Barker Brettell LLP
(86) International application number: PCT/CN2024/109422
(87) International publication number: WO 2025/044675

(57) **Abstract**

Embodiments of the present disclosure provide a video memory allocation method, a video memory request method, a device, and a storage medium. In the embodiments of the present disclosure, a video memory occupation request initiated by an application on a physical machine is intercepted, and a video memory occupation upper limit is configured for each application on the physical machine. Based on this, when the video memory occupation request is intercepted, it may be determined whether a sum of an amount of to-be-occupied video memory currently requested by the application and an amount of video memory occupied by the application exceeds the video memory occupation upper limit corresponding to the application, and if the sum exceeds the video memory occupation upper limit corresponding to the application, it is refused to respond to the video memory occupation request. In this way, video memory occupation requests generated on the physical machine may be filtered based on video memory occupation upper limits configured for different applications, to effectively isolate video memory occupied by the different applications, thereby avoiding excessive occupation of video memory by some applications, and further ensuring normal performance of all applications sharing video memory.

## Description

The present disclosure claims priority to Application No. 202311125060.1, filed with the China National Intellectual Property Administration on September 1, 2023 and entitled "VIDEO MEMORY ALLOCATION METHOD, VIDEO MEMORY REQUEST METHOD, DEVICE, AND STORAGE MEDIUM", which is incorporated herein by reference in its entirety.

### TECHNICAL FIELD

The present disclosure relates to the field of heterogeneous computing technologies, and in particular, to a video memory allocation method, a video memory request method, a device, and a storage medium.

### BACKGROUND

Cloud rendering is an important scenario in the field of heterogeneous computing technologies. In a broad sense, cloud rendering encompasses scenarios such as cloud desktops, cloud phones, cloud gaming, and metaverses. The objective of cloud rendering is to offload conventional applications that require local rendering to powerful cloud-based heterogeneous servers for execution. For example, in cloud gaming, conventional gaming applications that require local rendering are offloaded to cloud-based heterogeneous servers and rendered using GPUs of the cloud-based heterogeneous servers. Obtained results are then retrieved via a network and finally displayed locally.

Currently, considering that different applications typically do not occupy video memory associated with a GPU simultaneously, one GPU can provide cloud rendering services for multiple applications concurrently. However, an application tends to occupy as much video memory as possible to enhance the operational smoothness of the application. Given that video memory associated with a GPU is limited, other applications served by the GPU may fail to obtain sufficient video memory. Consequently, such applications crash or experience performance degradation, ultimately resulting in degraded user experience.

### SUMMARY

Various aspects of the present disclosure provide a video memory allocation method, a video memory request method, a device, and a storage medium, to ensure the performance of applications sharing video memory.

Embodiments of the present disclosure provide a video memory allocation method, applied to a physical machine, where the physical machine is equipped with video memory, and the method includes:
when a video memory occupation request initiated by any application running on the physical machine is intercepted, determining an amount of to-be-occupied video memory requested by the application;
determining whether a sum of the amount of to-be-occupied video memory and an amount of video memory occupied by the application exceeds a video memory occupation upper limit corresponding to the application; and
refusing to respond to the video memory occupation request if the sum exceeds the video memory occupation upper limit corresponding to the application.

The embodiments of the present disclosure further provide a video memory request method, applied to an application on a physical machine, where the physical machine is equipped with video memory, and the method includes:
initiating a video memory occupation request to an application rendering component in the physical machine, where the video memory occupation request carries an amount of to-be-occupied video memory;
if a response failure notification fed back by the application rendering component is received, initiating a retry request to the application rendering component, where an amount of to-be-occupied video memory carried in the retry request is less than the amount of to-be-occupied video memory carried in the video memory occupation request that encounters a response failure,
where the response failure notification is fed back to the application by the application rendering component after the application rendering component receives a refusal instruction sent by a video memory filter component added to the physical machine, and the video memory filter component is configured to intercept the video memory occupation request in the application rendering component and send the refusal instruction to the application rendering component when determining that the video memory occupation request does not meet an approval condition.

The embodiments of the present disclosure further provide a physical machine, including a memory and a processor, where the physical machine is equipped with video memory;
the memory is configured to store one or more computer instructions; and
the processor is coupled to the memory and the video memory, and configured to execute the one or more computer instructions to perform the foregoing video memory allocation method or the foregoing video memory request method.

The embodiments of the present disclosure further provide a computer-readable storage medium having computer instructions stored therein, where the computer instructions, when executed by one or more processors, cause the one or more processors to perform the foregoing video memory allocation method or the foregoing video memory request method.

In the embodiments of the present disclosure, a video memory occupation request initiated by an application on a physical machine is intercepted, and a video memory occupation upper limit is configured for each application on the physical machine. Based on this, when the video memory occupation request is intercepted, it may be determined whether a sum of an amount of to-be-occupied video memory currently requested by the application and an amount of video memory occupied by the application exceeds the video memory occupation upper limit corresponding to the application, and if the sum exceeds the video memory occupation upper limit corresponding to the application, it is refused to respond to the video memory occupation request. In this way, video memory occupation requests generated on the physical machine may be filtered based on video memory occupation upper limits configured for different applications, to effectively isolate video memory occupied by the different applications, thereby avoiding excessive occupation of video memory by some applications, and further ensuring normal performance of all applications sharing video memory.

### BRIEF DESCRIPTION OF DRAWINGS

The accompanying drawings described herein are used to provide a further understanding of the present disclosure and constitute a part of the present disclosure, and the schematic embodiments of the present disclosure and the descriptions thereof are used to explain the present disclosure and do not constitute an improper limitation on the present disclosure. The accompanying drawings are as follows.
FIG. 1 is a schematic flowchart of a video memory allocation method according to an exemplary embodiment of the present disclosure.
FIG. 2 is a logical schematic diagram of a video memory allocation method according to an exemplary embodiment of the present disclosure.
FIG. 3 is a logical schematic diagram of an optional implementation of a video memory allocation method according to an exemplary embodiment of the present disclosure.
FIG. 4 is a schematic flowchart of another video memory allocation method according to an exemplary embodiment of the present disclosure.
FIG. 5 is a schematic flowchart of a video memory request method according to another exemplary embodiment of the present disclosure.
FIG. 6 is a schematic diagram of an application scenario according to an exemplary embodiment of the present disclosure.
FIG. 7 is a schematic structural diagram of a physical machine according to yet another exemplary embodiment of the present disclosure.

### DESCRIPTION OF EMBODIMENTS

To clearly states the objectives, technical solutions, and advantages of the present disclosure, the technical solutions of the present disclosure will be clearly and completely described below with reference to specific embodiments of the present disclosure and the accompanying drawings. Apparently, the described embodiments are some embodiments rather than all the embodiments of the present disclosure. All other embodiments obtained by persons of ordinary skill in the art based on the embodiments of the present disclosure without creative efforts fall within the scope of protection of the present disclosure.

Currently, an application tends to occupy as much video memory as possible to enhance the operational smoothness of the application. Other applications served by a GPU may fail to obtain sufficient video memory. Consequently, such applications crash or experience performance degradation, ultimately resulting in degraded user experience. For this, in some embodiments of the present disclosure, a video memory occupation request initiated by an application on a physical machine is intercepted, and a video memory occupation upper limit is configured for each application on the physical machine. Based on this, when the video memory occupation request is intercepted, it may be determined whether a sum of an amount of to-be-occupied video memory currently requested by the application and an amount of video memory occupied by the application exceeds the video memory occupation upper limit corresponding to the application, and if the sum exceeds the video memory occupation upper limit corresponding to the application, it is refused to respond to the video memory occupation request. In this way, video memory occupation requests generated on the physical machine may be filtered based on video memory occupation upper limits configured for different applications, to effectively isolate video memory occupied by the different applications, thereby avoiding excessive occupation of video memory by some applications, and further ensuring normal performance of all applications sharing video memory.

The following describes the technical solution provided in each embodiment of the present disclosure in detail with reference to the accompanying drawings.

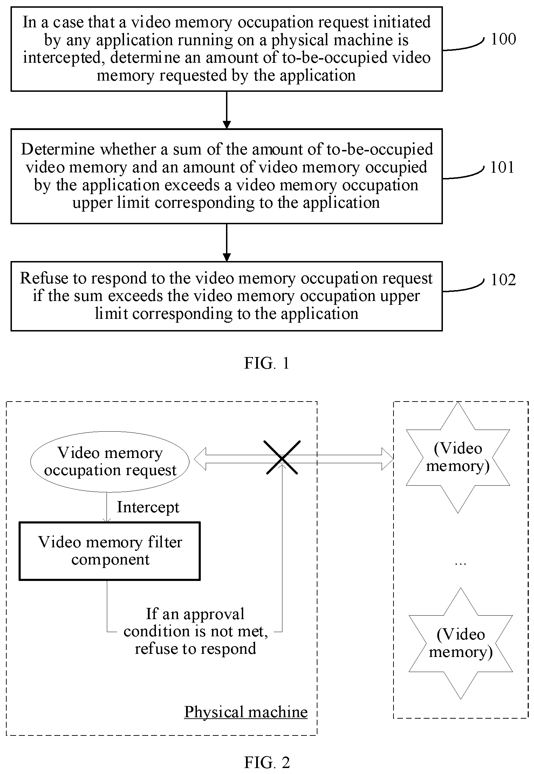

FIG. 1 is a schematic flowchart of a video memory allocation method according to an exemplary embodiment of the present disclosure. FIG. 2 is a logical schematic diagram of a video memory allocation method according to an exemplary embodiment of the present disclosure. The method may be performed by a video memory filter component. The video memory filter component may be implemented as software, hardware, or a combination of software and hardware. The video memory filter component may be integrated in a physical machine. Referring to FIG. 2, the physical machine is equipped with video memory. As a critical component of a graphics card, video memory can be connected to a bus in the physical machine to couple with components such as a processor in the physical machine based on a bus protocol.

The video memory, which may be understood as memory of the graphics card and may also be referred to as a frame buffer, serves to store rendered data that has been processed by a display chip or is about to be retrieved. In this embodiment, a type, a specification, and the like of the graphics card chip are not limited, and the graphics card chip in this embodiment may be a graphics processing unit (GPU).

It should be noted that the GPU in this embodiment may be used as a heterogeneous acceleration device of the physical machine, and the GPU may provide an acceleration service for each application running on the physical machine.

The video memory allocation method provided in this embodiment may be applied to various scenarios in which a GPU is used to perform heterogeneous acceleration. In a cloud rendering scenario, for example, a cloud desktop scenario, a cloud gaming scenario, or a cloud phone scenario, the physical machine in this embodiment may be a cloud server. The cloud rendering application may be understood as a type of application in which rendering computations are completed in a cloud server using GPU acceleration, and a rendering result is sent to a client side for display. In a non-cloud rendering scenario, for example, a local desktop scenario or a browser scenario, the physical machine in this embodiment may be a non-cloud server, for example, a server in an enterprise server room or a personal computer of a user. In different scenarios, diversified applications need to share video memory on the physical machine. For example, in the cloud rendering scenario, the application in this embodiment may be a cloud desktop application, a cloud gaming application, a cloud phone application, or another cloud rendering application. In the non-cloud rendering scenario, the application in this embodiment may be a local desktop application, a browser application, or the like. In this embodiment, an application scenario is not limited, work roles undertaken by the physical machine in different application scenarios are not limited, and types of applications supported in different application scenarios are also not limited.

In addition, in this embodiment, a solution used inside the physical machine to support GPU invocation by the application running on the physical machine is not limited. For example, a physical GPU (including video memory associated with the GPU) may be provided to an application in a virtualized manner for use. For another example, direct access of a GPU in an I/O manner by an application may be supported. No matter which solution is used, the implementation of the video memory allocation method in this embodiment is not affected.

Based on this, referring to FIG. 1, the video memory allocation method provided in this embodiment may include the following steps.

Step 100. when a video memory occupation request initiated by any application running on a physical machine is intercepted, determine an amount of to-be-occupied video memory requested by the application.

Step 101. determine whether a sum of the amount of to-be-occupied video memory and an amount of video memory occupied by the application exceeds a video memory occupation upper limit corresponding to the application.

Step 102. refuse to respond to the video memory occupation request if the sum exceeds the video memory occupation upper limit corresponding to the application.

Referring to FIG. 2, in this embodiment, a video memory filter component is added to the physical machine, and the video memory allocation method provided in this embodiment is performed using the video memory filter component.

Referring to FIG. 1, in step 100, a video memory occupation request generated on the physical machine may be intercepted. When a video memory occupation request initiated by any application running on the physical machine is intercepted, an amount of to-be-occupied video memory requested by the application may be parsed from the video memory occupation request. Referring to FIG. 2, the video memory filter component may detect a video memory occupation request generated on the physical machine, and intercept the detected video memory occupation request.

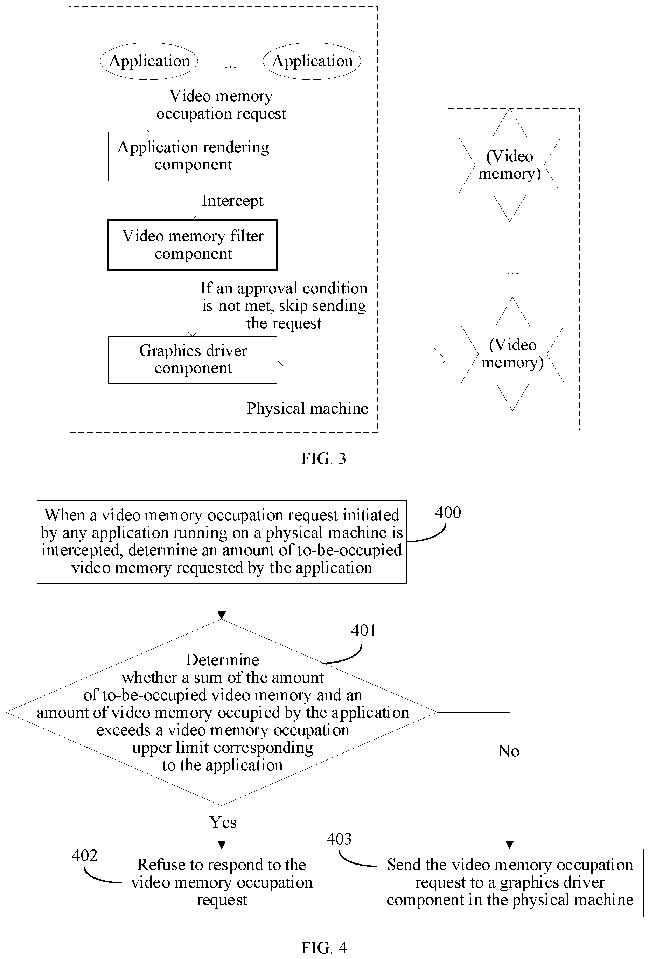

FIG. 3 is a logical schematic diagram of an optional implementation of a video memory allocation method according to an exemplary embodiment of the present disclosure. Referring to FIG. 3, in an optional interception implementation solution, the video memory filter component may interface with an application rendering component in the physical machine via a second preset interface. Based on this, the video memory filter component may monitor a specified interface in the application rendering component in the physical machine using the second preset interface, and when it is detected that the specified interface initiates a video memory occupation request to the graphics driver component in the physical machine, intercept the detected video memory occupation request. The specified interface in the application rendering component may be an interface configured to send the video memory occupation request to the graphics driver component. In the interception implementation solution, the second preset interface is disposed for the video memory filter component, and an interface function is configured for the interface: monitoring the video memory occupation request sent by the application rendering component to the graphics driver component and intercepting the detected video memory occupation request. In a conventional video memory allocation solution, the application rendering component in the physical machine is configured to receive a video memory occupation request initiated by an application in the physical machine, and forward the video memory occupation request to the graphics driver component in the physical machine. Different from a conventional rendering process, in the foregoing optional interception implementation solution, the video memory filter component provided in this embodiment is added between the application rendering component and the graphics driver component, and based on the foregoing interface function configured for the second preset interface, the video memory filter component may intercept, using the second preset interface, the video memory occupation request initiated by the application rendering component to the graphics driver component, to avoid that the video memory occupation request is directly approved and sent to the graphics driver component to trigger a response. That is, the interception implementation is performing an interception operation at a forwarding exit of the application rendering component.

It should be noted that the interception implementation solution is merely exemplary, and this embodiment is not limited thereto. For example, the second preset interface may alternatively be configured to monitor an interface that is in the application rendering component in the physical machine and that is configured to receive a video memory occupation request initiated by an application, and intercept the detected video memory occupation request. That is, an interception operation is performed at a forwarding entrance of the application rendering component.

The intercepting in this embodiment refers to prohibiting the detected video memory occupation request from being sent to the graphics driver component. During actual application, a filter technology or the like may be used to intercept the video memory occupation request. This is not limited and is not described in detail herein.

In addition, it should be understood that a type of an operating system used in the physical machine is not limited in this embodiment. In different types of operating systems, the application rendering component may be referred to differently, and details are not described herein. The application rendering component in this embodiment may be an existing component in various operating systems that is configured to interface with an application layer, receive, from the application layer, a rendering task initiated by an application, and deliver the rendering task to the graphics driver component. In this embodiment, the existing application rendering component does not need to be reconstructed. Instead, the video memory filter component added to the physical machine is used to interact with the existing application rendering component to intercept, from the application rendering component, a video memory occupation request generated in the physical machine. Similarly, in different types of operating systems, the graphics driver component may also be referred to differently, and details are also not described herein. The graphics driver component in this embodiment may be an existing component used for driving a graphics card in various operating systems. Similarly, in this embodiment, the graphics driver component is also not reconstructed. Instead, the video memory filter component added to the physical machine is used to interact with the existing graphics driver component to obtain, from the graphics driver component, related information required to perform the video memory allocation method provided in this embodiment. Referring to FIG. 3, in this embodiment, the video memory filter component added to the physical machine may be disposed between the application rendering component and the graphics driver component, and the video memory filter component may separately interact with the application rendering component and the graphics driver component.

Compared with a conventional video memory allocation solution, in this embodiment, instead of being directly transferred to the graphics driver component, the video memory occupation request sent by the application is intercepted by the graphics card filter component in this embodiment. In this way, instead of occupying as much video memory as requested like in a conventional rendering process, an application needs to wait for further scheduling by the graphics card filter component in this embodiment.

In this embodiment, the video memory occupation request may carry the amount of to-be-occupied video memory requested by the application. During actual application, a single application may initiate one or more video memory occupation requests, and these video memory occupation requests may all be intercepted in step 100. Subsequently, condition determining is performed indiscriminately on the intercepted video memory occupation requests based on the approval condition in step 101.

Still referring to FIG. 1, in step 101, a video memory occupation upper limit may be configured for each application running on the physical machine. Video memory occupation upper limits corresponding to different applications may not be completely the same.

In an exemplary implementation solution, the video memory filter component may dynamically configure a video memory occupation upper limit for each application. In the exemplary implementation solution, the video memory filter component may determine, in response to an occasion of configuring video memory occupation upper limits being reached, a quantity and types of applications that currently need to share video memory on the physical machine; and configure, based on a total amount of video memory on the physical machine and the determined quantity and types, a video memory occupation upper limit for each of the applications that currently need to share video memory. A sum of the video memory occupation upper limits allocated to the applications that currently need to share video memory does not exceed the total amount of video memory on the physical machine.

In the exemplary implementation solution, the video memory filter component may periodically execute the foregoing configuration logic of video memory occupation upper limits. During each round of configuration process, the quantity and types of applications that need to share video memory on the physical machine may change. Correspondingly, the video memory occupation upper limit allocated to the same application during different rounds of configuration processes may dynamically change. An allocation rule specifically used in the configuration logic is not limited herein. For example, priorities of applications may be sorted based on types, and video memory occupation upper limits may be allocated by combining priority information and quantity information. The allocation rule is not limited herein, and is not described herein again.

It should be understood that the foregoing provided solution of configuring video memory occupation upper limits is merely exemplary, and this embodiment is not limited thereto. In this embodiment, another solution may alternatively be used to configure video memory occupation upper limits for applications. For example, video memory occupation upper limits may be allocated and configured for different applications based on experience .

Based on these, in step 101, it may be determined whether the sum of the amount of to-be-occupied video memory and the amount of video memory occupied by the application exceeds the video memory occupation upper limit corresponding to the application.

The amount of video memory occupied by the application is an amount of video memory already occupied before the application initiates the current video memory occupation request. The amount of to-be-occupied video memory is an amount of video memory that the application expects to occupy through the current video memory occupation request. In this way, if the sum of the amount of to-be-occupied video memory and the amount of video memory occupied by the application exceeds the video memory occupation upper limit corresponding to the application, it indicates that after a response is made to the video memory occupation request, the amount of video memory occupied by the application exceeds the video memory occupation upper limit corresponding to the application, that is, the application preempts excessive video memory.

In an optional implementation, video memory record information may be maintained for each application, and the video memory record information may include video memory occupation and/or release records of the application. In this way, the video memory record information associated with the application in step 100 may be queried, and the amount of video memory occupied by the application is calculated based on the found video memory record information.

Referring to FIG. 3, in the optional implementation, the video memory filter component may interface with the graphics driver component via a first preset interface. Based on this, the video memory filter component may monitor, using the first preset interface, a video memory occupation and/or a release operation performed by the graphics driver component in the physical machine for the application to update the video memory record information maintained for the application. It should be noted that the graphics driver component in the physical machine is configured to bear video memory allocation work. That is, the graphics driver component is configured to respond to the video memory occupation request to perform a video memory occupation operation for the corresponding application. A graphics card release operation may further occur in the graphics driver component to release video memory occupied by a corresponding application. In the optional implementation, the video memory occupation and/or the release operation in the graphics driver component may be detected to generate a corresponding video memory occupation record and/or video memory release record with an application as a unit.

The video memory occupation record may reflect a total historical occupation amount of video memory by the application, and the video memory release record may reflect a total historical release amount of video memory by the application. Based on this, the amount of video memory occupied by the application may be obtained by calculating a difference between the total historical occupation amount and the total historical release amount of video memory by the application. It should be noted that during actual application, the application may undergo no video memory release event. In this case, no video memory release record exists or a video memory release record is empty in corresponding video memory record information. Similarly, if no video memory has been successfully allocated to the application, no video memory occupation record exists or a video memory occupation record is empty in corresponding existing record information. In the optional implementation, the video memory record information may be maintained for each application based on a video memory occupation operation and a video memory release operation that are actually detected from the graphics driver component.

It can be known that in an optional implementation, the video memory filter component maintains the video memory record information for each application. In this way, the video memory filter component can comprehensively and promptly monitor video memory occupation of each application, thereby accurately determining an amount of video memory occupied by an application. Compared with a conventional video memory allocation solution, instead of video memory allocation performed according to a first-come-first-served mechanism, the occupation of video memory by applications is taken into consideration, and video memory is allocated with limits, thereby avoiding excessive occupation of video memory by an application that comes first.

Still referring to FIG. 1, in step 102, if it is determined that the sum of the amount of to-be-occupied video memory and the amount of video memory occupied by the application exceeds the video memory occupation upper limit corresponding to the application, it is refused to respond to the video memory occupation request.

Referring to FIG. 3, based on an interfacing relationship between the video memory filter component and the application rendering component, in step 102, a refusal instruction may be returned to the application rendering component to prohibit the video memory occupation request from being sent to the graphics driver component; and the application rendering component is triggered to return a response failure notification to the application initiating the video memory occupation request. For example, an error code STATUS_NO_MEMORY (indicating insufficient video memory capacity) may be used as the refusal instruction, which certainly is not limited thereto.

In this way, from the perspective of the application rendering component, in this embodiment, the refusal instruction returned by the video memory filter component to the application rendering component may, on one hand, enable the application rendering component to learn that the video memory occupation request encounters a response failure, and on the other hand, trigger the application rendering component to return the response failure notification to the application initiating the video memory occupation request. From the perspective of the graphics driver component, the graphics driver component is unaware of the existence of the rejected video memory occupation request. From the perspective of the application, after receiving the response failure notification, the application may learn that the video memory occupation request initiated by the application encounters a response failure.

Optionally, the refusal instruction in this embodiment may use an instruction format consistent with that of a refusal instruction returned by the graphics driver component to the application rendering component in a conventional video memory allocation solution, so that the application rendering component understands the refusal instruction in step 102 according to an original communication protocol. In this way, from the perspective of the application rendering component, the application rendering component is unaware of a process of the video memory occupation request being intercepted.

In a conventional video memory allocation solution, after receiving a response failure notification, an application typically understands that no remaining video memory exists on the physical machine, and the application typically does not continue to make a video memory request. Different from a conventional video memory allocation solution, in this embodiment, sending of a retry request for a rejected video memory occupation request by an application is supported.

To improve a success rate of the retry request sent by the application, in this embodiment, the refusal instruction returned by the graphics card filter component to the application rendering component may use a specified format for differentiation from a refusal instruction returned by the graphics driver component to the application rendering component in a conventional video memory allocation solution. In this case, the refusal instruction in the specific format may be used for indicating a refusal reason being an excessive video memory request amount. Further, the graphics card filter component may further add a video memory request amount recommendation to the refusal instruction. For example, the graphics card filter component may calculate the remaining amount of video memory available for occupation based on the video memory occupation upper limit of the application and the amount of occupied video memory, and use the remaining amount of video memory available for occupation as the video memory request amount recommendation. In addition, the response failure notification fed back by the application rendering component to the application may also use a specified format to indicate a response failure reason being an excessive video memory request amount. Further, the foregoing video memory request amount recommendation may also be carried in the response failure notification. For the application, after receiving such a response failure notification, the application may initiate a retry request for a rejected video memory occupation request. It should be understood that the retry request is essentially still a video memory occupation request. In addition, in this embodiment, an amount of to-be-occupied video memory requested in the retry request initiated by the application may be lower than the amount of to-be-occupied video memory requested in the rejected video memory occupation request corresponding to the retry request. When the response failure notification carries the video memory request amount recommendation, the application may configure the amount of to-be-occupied video memory in the retry request based on the video memory request amount recommendation. For example, the amount of to-be-occupied video memory in the retry request is configured to be less than or equal to the amount of video memory available for occupation indicated in the video memory request amount recommendation.

For this, in this embodiment, when it is detected that the application initiates a retry request after receiving the response failure notification, the operation of determining the amount of to-be-occupied video memory requested by the application and the subsequent ones may be performed again for the retry request to determine whether to allow to respond to the retry request. That is, for the retry request initiated by the application, the foregoing steps 100 to 102 in this embodiment are also performed to determine whether to run response to the retry request. Similarly, if the retry request does not meet the approval condition in step 101, it is still refused again to respond to the retry request.

FIG. 4 is a schematic flowchart of another video memory allocation method according to an exemplary embodiment of the present disclosure. Referring to FIG. 4, the method may include the following steps.

Step 400. in a case that a video memory occupation request initiated by any application running on a physical machine is intercepted, determine an amount of to-be-occupied video memory requested by the application.

Step 401. determine whether a sum of the amount of to-be-occupied video memory and an amount of video memory occupied by the application exceeds a video memory occupation upper limit corresponding to the application; if the sum exceeds the video memory occupation upper limit corresponding to the application, perform step 402; and if the sum does not exceed the video memory occupation upper limit corresponding to the application, perform step 403.

Step 402. refuse to respond to the video memory occupation request.

Step 403. send the video memory occupation request to a graphics driver component in the physical machine to trigger the graphics driver component to respond to the video memory occupation request.

For step 400 and step 401, refer to related descriptions in the foregoing embodiment, and details are not described herein again. This embodiment provides, based on step 403, a flow branch when the sum of the amount of to-be-occupied video memory and the amount of video memory occupied by the application does not exceed the video memory occupation upper limit corresponding to the application. In this flow branch, a video memory filter component may forward the video memory occupation request intercepted from an application rendering component to a graphics driver component. Certainly, the video memory filter component may alternatively control the application rendering component to send the video memory occupation request to the graphics driver component. This is not limited herein.

It can be known that, in this embodiment, if it is determined in step 101 that the video memory occupation request meets an approval condition, the video memory occupation request may be approved to normally respond to such a video memory occupation request. In this way, only a video memory occupation request that does not cause filtering occupation of video memory by an application is approved. This can ensure that an amount of video memory allocated to each application running on the physical machine does not exceed a video memory occupation upper limit corresponding to the application, thereby effectively avoiding excessive preemption of video memory by some applications.

In summary, in this embodiment, a video memory occupation request initiated by an application on a physical machine is intercepted, and a video memory occupation upper limit is configured for each application on the physical machine. Based on this, when the video memory occupation request is intercepted, it may be determined whether a sum of an amount of to-be-occupied video memory currently requested by the application and an amount of video memory occupied by the application exceeds the video memory occupation upper limit corresponding to the application, and if the sum exceeds the video memory occupation upper limit corresponding to the application, it is refused to respond to the video memory occupation request. In this way, video memory occupation requests generated on the physical machine may be filtered based on video memory occupation upper limits configured for different applications, to effectively isolate video memory occupied by the different applications, thereby avoiding excessive occupation of video memory by some applications, and further ensuring normal performance of all applications sharing video memory.

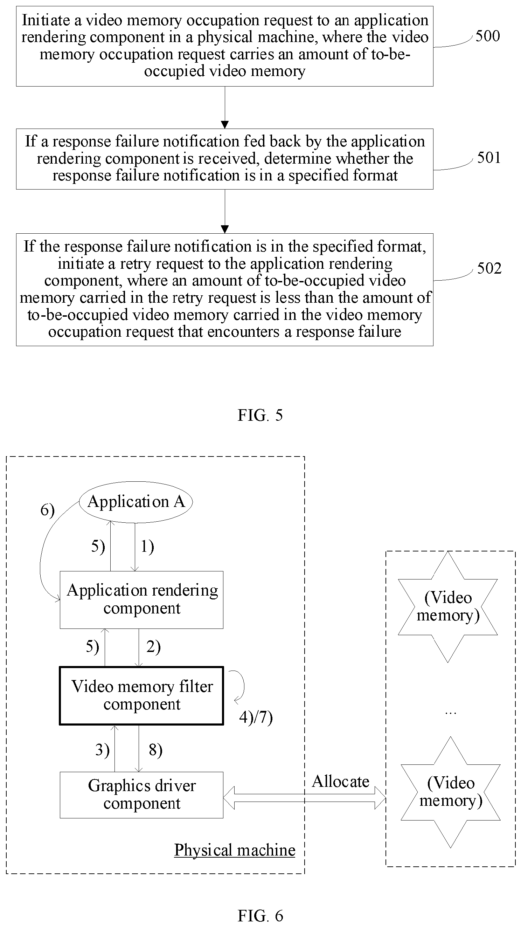

FIG. 5 is a schematic flowchart of a video memory request method according to another exemplary embodiment of the present disclosure. Referring to FIG. 5, the method is applicable to an application on a physical machine. The physical machine is equipped with video memory. The method may include the following steps.

Step 500. initiate a video memory occupation request to an application rendering component in a physical machine, where the video memory occupation request carries an amount of to-be-occupied video memory.

Step 501. if a response failure notification fed back by the application rendering component is received, determine whether the response failure notification is in a specified format.

Step 502. if the response failure notification is in the specified format, initiate a retry request to the application rendering component, where an amount of to-be-occupied video memory carried in the retry request is less than the amount of to-be-occupied video memory carried in the video memory occupation request that encounters a response failure.

The response failure notification is fed back to the application by the application rendering component after the application rendering component receives a refusal instruction sent by a video memory filter component added to the physical machine. The video memory filter component is configured to intercept the video memory occupation request in the application rendering component and send the refusal instruction to the application rendering component when determining that the video memory occupation request does not meet an approval condition. In addition, the approval condition may refer to whether a sum of the amount of to-be-occupied video memory and an amount of video memory occupied by the application exceeds a video memory occupation upper limit corresponding to the application.

For related technical logic of the video memory filter component, refer to related descriptions in the foregoing embodiments, and details are not described herein again.

In an optional embodiment, an implementation of initiating the retry request to the application rendering component may be:
if the response failure notification carries a video memory request amount recommendation, configuring, based on the video memory request amount recommendation, the amount of to-be-occupied video memory carried in the retry request, where the video memory amount request recommendation is determined by the video memory filter component based on a video memory occupation upper limit and an amount of occupied video memory that correspond to the application and is provided to the application rendering component.

In summary, based on the video memory request method provided in this embodiment, after receiving the response failure notification fed back by the application rendering component, the application on the physical machine may adjust an amount of to-be-occupied video memory, and initiate a retry request to request an amount of video memory allowable by the graphics card filter component. Compared with a conventional video memory request solution, after a video memory occupation request fails, instead of blindly abandoning the request, an application may initiate a retry request based on a more appropriate amount of to-be-occupied video memory. In this way, the application can request an appropriate amount of video memory to isolate video memory for different applications, thereby avoiding a problem that some applications occupy excessive amounts of video memory and as a result other applications fail to run normally due to insufficient video memory.

FIG. 6 is a schematic diagram of an application scenario according to an exemplary embodiment of the present disclosure. Referring to FIG. 6, a video memory occupation request initiated by an application A running on a physical machine is used as an example. Based on a video memory allocation method and a video memory request method provided in this embodiment, an approximate processing process is as follows:
1) The application A initiates the video memory occupation request to an application rendering component, where a requested amount of to-be-occupied video memory is 2 G.
2) A video memory filter component intercepts, from the application rendering component, the video memory occupation request initiated by the application A in 1).
3) The video memory filter component further monitors a video memory occupation operation and a video memory release operation in a graphics driver component to maintain video memory record information for the application A, and learns, by querying the video memory record information, that an amount of video memory occupied by the application A is 3 G.
4) The video memory filter component calculates that a sum of the amount of to-be-occupied video memory and the amount of video memory occupied by the application A is 5 G, which exceeds a video memory occupation upper limit of the application A being 4 G.
5) The video memory filter component returns an error code STATUS_NO_MEMORY for the video memory occupation request to the application rendering component. The application rendering component returns a response failure notification to the application A.
6) After a period of time, the application A initiates a retry request to the application rendering component for the rejected video memory occupation request. An amount of to-be-occupied video memory requested in the retry request is 1 G. Step 2) is repeated.
7) The video memory filter component calculates that the sum of the amount of to-be-occupied video memory and the amount of video memory occupied by the application A is 4 G, which does not exceed the video memory occupation upper limit of the application A being 4 G.
8) The retry request is sent to the graphics driver component, and the graphics driver component allocates video memory of 1 G to the application A.

It can be known that according to the video memory allocation method and the video memory request method provided in this embodiment, an amount of video memory occupied by a single application may be limited from exceeding a video memory occupation upper limit corresponding to the single application, thereby avoiding excessive preemption of video memory by the single application. In addition, based on a video memory occupation upper limit, it can be ensured that at least an amount of video memory less than or equal to a video memory occupation upper limit of each application can be allocated to the application, thereby ensuring that all applications can run normally.

In addition, in this embodiment, instead of directly interfering with the start and stop of an application, only a video memory occupation request initiated by the application is filtered (for example, when the application runs in a container, this embodiment does not directly interfere with the pause or release of the container in which the application is located), and the decision-making authority is delegated to the application. The application may determine to retry or pause directly for the rejected video memory occupation request of the application. In this way, problems such as application crashes or performance degradation caused by inappropriate allocation of video memory can be effectively avoided.

It should be noted that some procedures described in the foregoing embodiments and the accompanying drawings include a plurality of operations that appear in a specific sequence. However, it should be clearly understood that these operations may not be performed in the sequence in which the operations appear in this specification or may be performed in parallel. The sequence numbers of the operations, for example, 101 and 102, are merely used for distinguishing different operations, and do not indicate any execution sequence. In addition, these procedures may include more or fewer operations, and the operations may be performed in sequence or in parallel. It should be noted that the descriptions of "first", "second", and the like in this specification are used to distinguish between different preset interfaces, and the like, and do not indicate a sequence or limit "first" and "second" to being different types.

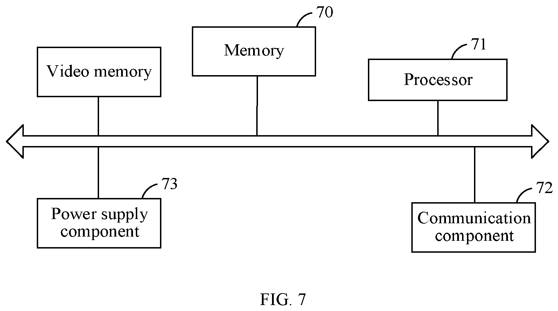

FIG. 7 is a schematic structural diagram of a physical machine according to yet another exemplary embodiment of the present disclosure. As shown in FIG. 7, the physical machine may include a memory 70 and a processor 71. The physical machine is further equipped with video memory.

The processor 71 is coupled to the memory 70 and the video memory, and is configured to execute a computer program in the memory 70.

In some design solutions, the processor 71 may be configured to:
when a video memory occupation request initiated by any application running on the physical machine is intercepted, determine an amount of to-be-occupied video memory requested by the application;
determine whether a sum of the amount of to-be-occupied video memory and an amount of video memory occupied by the application exceeds a video memory occupation upper limit corresponding to the application; and
refuse to respond to the video memory occupation request if the sum exceeds the video memory occupation upper limit corresponding to the application.

In an optional embodiment, the processor 71 may be further configured to:
query video memory record information associated with the application, where the video memory record information includes video memory occupation and/or release records of the application; and
calculate, based on the video memory record information, the amount of video memory occupied by the application.

In an optional embodiment, the processor 71 may be further configured to:
monitor, using a first preset interface, a video memory occupation and/or a release operation performed by a graphics driver component in the physical machine for the application to update the video memory record information maintained for the application.

In an optional embodiment, the processor 71 may be further configured to:
monitor a specified interface in an application rendering component in the physical machine using a second preset interface; and
if it is detected that the specified interface initiates the video memory occupation request to a graphics driver component in the physical machine, intercept the detected video memory occupation request,
where the application rendering component is configured to receive the video memory occupation request initiated by the application on the physical machine.

In an optional embodiment, when refusing to respond to the video memory occupation request, the processor 71 may be further configured to:
return a refusal instruction to the application rendering component to trigger the application rendering component to return a response failure notification to the application initiating the video memory occupation request.

In an optional embodiment, the processor 71 may be further configured to:
when it is detected that the application initiates a retry request after receiving the response failure notification, perform the operation of determining the amount of to-be-occupied video memory requested by the application and the subsequent ones again for the retry request to determine whether to allow to respond to the retry request.

In an optional embodiment, the processor 71 may be further configured to:
send the video memory occupation request to a graphics driver component in the physical machine if the sum of the amount of to-be-occupied video memory and the amount of video memory occupied by the application does not exceed the video memory occupation upper limit corresponding to the application to trigger the graphics driver component to respond to the video memory occupation request.

In an optional embodiment, when the physical machine is a cloud server, the application includes a cloud rendering application, and the cloud rendering application includes a cloud desktop application, a cloud gaming application, or a cloud phone application; and when the physical machine is a non-cloud server, the application includes a local rendering application, and the local rendering application includes a local desktop application or a browser application.

In an optional embodiment, the processor 71 may be further configured to:
determine, in response to an occasion of configuring video memory occupation upper limits being reached, a quantity and types of applications that currently need to share video memory on the physical machine; and
configure, based on a total amount of video memory on the physical machine and the determined quantity and types, a video memory occupation upper limit for each of the applications that currently need to share video memory,
where a sum of the video memory occupation upper limits allocated to the applications that currently need to share video memory does not exceed the total amount of video memory on the physical machine.

In some other design solutions, the processor 71 may be further configured to:
initiate a video memory occupation request to an application rendering component in the physical machine, where the video memory occupation request carries an amount of to-be-occupied video memory;
if a response failure notification fed back by the application rendering component is received, determine whether the response failure notification is in a specified format; and
if the response failure notification is in the specified format, initiate a retry request to the application rendering component, where an amount of to-be-occupied video memory carried in the retry request is less than the amount of to-be-occupied video memory carried in the video memory occupation request that encounters a response failure,
where the response failure notification is fed back to the application by the application rendering component after the application rendering component receives a refusal instruction sent by a video memory filter component added to the physical machine, and the video memory filter component is configured to intercept the video memory occupation request in the application rendering component and send the refusal instruction to the application rendering component when determining that the video memory occupation request does not meet an approval condition.

In an optional embodiment, when initiating the retry request to the application rendering component, the processor 71 may be further configured to:
if the response failure notification carries a video memory request amount recommendation, configure, based on the video memory request amount recommendation, the amount of to-be-occupied video memory carried in the retry request,
where the video memory amount request recommendation is determined by the video memory filter component based on a video memory occupation upper limit and an amount of occupied video memory that correspond to the application and is provided to the application rendering component.

Further, as shown in FIG. 7, the physical machine further includes other components such as a communication component 72 and a power supply component 73. Only some components are schematically provided in FIG. 7, which does not mean that the physical machine includes only the components shown in FIG. 7.

It should be noted that for technical details of the foregoing embodiments of the physical machine, refer to related descriptions in the foregoing method embodiments. To reduce space, details are not described herein again, but this should not cause a loss to the scope of protection of the present disclosure.

Correspondingly, embodiments of the present disclosure further provide a computer-readable storage medium storing a computer program. The computer program can implement the steps in the foregoing method embodiments when being executed.

The memory in FIG. 7 is configured to store a computer program, and may be configured to store various other data to support operations on a computing platform. Examples of such data include instructions for any applications or methods operated on the computing platform, contact data, phonebook data, messages, pictures, video, etc. The memory may be implemented using any type of volatile or non-volatile memory devices, or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The communication component in FIG. 7 is configured to facilitate communication in a wired or wireless manner between a device in which the communication component is located and another device. The device in which the communication component is located may access a wireless network based on a communication standard, for example, a Wi-Fi network, a 2G network, a 3G network, a 4G/LTE network, a 5G network, or another mobile communication network, or a combination thereof. In an exemplary embodiment, the communication component receives a broadcast signal or broadcast related information from an external broadcast management system through a broadcast channel. In an exemplary embodiment, the communication component further includes a near field communication (NFC) module, to promote short range communication. For example, the NFC module may be implemented based on a radio frequency identification (RFID) technology, an infrared data association (IrDA) technology, an ultra-wideband (UWB) technology, a Bluetooth (BT) technology, and other technologies.

The power supply component in FIG. 7 provides power to various components of a device in which the power supply component is located. The power supply component may include a power management system, one or more power sources, and any other components associated with the generation, management, and distribution of power in the device in which the power supply component is located.

Persons skilled in the art should understand that embodiments of the present disclosure may be provided as a method, a system or a computer program product. Therefore, the present disclosure may use a form of hardware only embodiments, software only embodiments, or embodiments with a combination of software and hardware. In addition, the present disclosure may use a form of a computer program product implemented on one or more computer-usable storage media (including, but not limited to, a disk memory, a CD-ROM, an optical memory, and the like) that include computer-usable program code.

The present disclosure is described with reference to the flowcharts and/or block diagrams of the method, the device (system), and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes instructions apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It should be further noted that the terms "include", "comprise", or any variation thereof are intended to cover a non-exclusive inclusion. Therefore, in the context of a process, a method, a commodity, or a device that includes a series of elements, the process, method, object or device not only includes such elements, but also includes other elements not specified expressly, or may include inherent elements of the process, method, commodity, or device. When no more limitations are made, an element limited by "include a/an ..." does not exclude other same elements existing in the process, the method, the commodity, or the device which includes the element.

It should be noted that all user information (including, but not limited to, user equipment information, and user personal information) and data (including, but not limited to, data for analysis, stored data, and displayed data) in the present disclosure are information and data that are authorized by users or fully authorized by all parties. The collection, use, and processing of related data must comply with applicable laws, regulations, and standards in relevant countries and regions, and corresponding operational entries are provided for users to choose whether to grant or deny authorization.

The foregoing descriptions are merely embodiments of the present disclosure and are not intended to limit the present disclosure. Persons skilled in the art may make various modifications and variations to the present disclosure. Any modification, equivalent replacement, or improvement made within the spirit and principle of the present disclosure shall fall within the scope of protection of the present disclosure.

## Claims

1. A video memory allocation method, applied to a physical machine, wherein the physical machine is equipped with video memory, and the method comprises:
in a case that a video memory occupation request initiated by any application running on the physical machine is intercepted, determining an amount of to-be-occupied video memory requested by the application;
determining whether a sum of the amount of to-be-occupied video memory and an amount of video memory occupied by the application exceeds a video memory occupation upper limit corresponding to the application; and
refusing to respond to the video memory occupation request if the sum exceeds the video memory occupation upper limit corresponding to the application.

2. The method according to claim 1, further comprising:
querying video memory record information associated with the application, wherein the video memory record information comprises video memory occupation record and/or video memory release record of the application; and
calculating, based on the video memory record information, the amount of video memory occupied by the application.

3. The method according to claim 2, further comprising:
monitoring, using a first preset interface, a video memory occupation operation and/or a video memory release operation performed by a graphics driver component in the physical machine for the application to update the video memory record information maintained for the application.

4. The method according to claim 1, further comprising:
monitoring a specified interface in an application rendering component in the physical machine using a second preset interface; and
if it is detected that the specified interface initiates the video memory occupation request to a graphics driver component in the physical machine, intercepting the detected video memory occupation request,
wherein the application rendering component is configured to receive the video memory occupation request initiated by the application in the physical machine.

5. The method according to claim 4, wherein the refusing to respond to the video memory occupation request comprises:
returning a refusal instruction to the application rendering component to trigger the application rendering component to return a response failure notification in a specified format to the application initiating the video memory occupation request,
wherein the refusal instruction carries a video memory request amount recommendation.

6. The method according to claim 5, further comprising:
in a case that it is detected that the application initiates a retry request after receiving the response failure notification, performing the operation of determining the amount of to-be-occupied video memory requested by the application and the subsequent ones again for the retry request to determine whether to allow to respond to the retry request.

7. The method according to claim 1, further comprising:
sending the video memory occupation request to a graphics driver component in the physical machine if the sum of the amount of to-be-occupied video memory and the amount of video memory occupied by the application does not exceed the video memory occupation upper limit corresponding to the application to trigger the graphics driver component to respond to the video memory occupation request.

8. The method according to claim 1, wherein when the physical machine is a cloud server, the application comprises a cloud rendering application, and the cloud rendering application comprises a cloud desktop application, a cloud gaming application, or a cloud phone application; and when the physical machine is a non-cloud server, the application comprises a local rendering application, and the local rendering application comprises a local desktop application or a browser application.

9. The method according to claim 1, further comprising:
determining, in response to an occasion of configuring video memory occupation upper limits being reached, a quantity and types of applications that currently need to share video memory on the physical machine; and
configuring, based on a total amount of video memory on the physical machine and the determined quantity and types, a video memory occupation upper limit for each of the applications that currently need to share video memory,
wherein a sum of the video memory occupation upper limits allocated to the applications that currently need to share video memory does not exceed the total amount of video memory on the physical machine.

10. A video memory request method, applied to an application on a physical machine, wherein the physical machine is equipped with video memory, and the method comprises:
initiating a video memory occupation request to an application rendering component in the physical machine, wherein the video memory occupation request carries an amount of to-be-occupied video memory;
if a response failure notification fed back by the application rendering component is received, determining whether the response failure notification is in a specified format; and
if the response failure notification is in the specified format, initiating a retry request to the application rendering component, wherein an amount of to-be-occupied video memory carried in the retry request is less than the amount of to-be-occupied video memory carried in the video memory occupation request that encounters a response failure,
wherein the response failure notification is fed back to the application by the application rendering component after the application rendering component receives a refusal instruction sent by a video memory filter component added to the physical machine, and the video memory filter component is configured to intercept the video memory occupation request in the application rendering component and send the refusal instruction to the application rendering component when determining that the video memory occupation request does not meet an approval condition.

11. The method according to claim 10, wherein the initiating the retry request to the application rendering component comprises:
if the response failure notification carries a video memory request amount recommendation, configuring, based on the video memory request amount recommendation, the amount of to-be-occupied video memory carried in the retry request,
wherein the video memory amount request recommendation is determined by the video memory filter component based on a video memory occupation upper limit and an amount of occupied video memory that correspond to the application and is provided to the application rendering component.

12. A physical machine, comprising a memory and a processor, wherein the physical machine is equipped with video memory;
the memory is configured to store one or more computer instructions; and
the processor is coupled to the memory and the video memory, and configured to execute the one or more computer instructions to perform the video memory allocation method according to any one of claims 1 to 9 or the video memory request method according to claim 10 or 11.

13. A computer-readable storage medium having computer instructions stored therein, wherein the computer instructions, when executed by one or more processors, cause the one or more processors to perform the video memory allocation method according to any one of claims 1 to 9 or the video memory request method according to claim 10 or 11.

14. A computer program, comprising computer instructions, wherein the computer instructions, when executed by a processor, implement the video memory allocation method according to any one of claims 1 to 9 or the video memory request method according to claim 10 or 11.
